# EUROPEAN PATENT APPLICATION

(11) **EP 3 499 102 A1**
(43) Date of publication of application: **19.06.2019**
(21) Application number: 18213464.3
(22) Date of filing: 18.12.2018
(51) Int. Cl.: F16K 31/06, H01F 7/08

(54) **ANTI-LATCHING AND DAMPING SHIM FOR AN ELECTROMAGNETIC ACTUATOR**

(30) Priority: 18.12.2017 US 201762607184 P
(71) Applicant: HUSCO Automotive Holdings LLC, Waukesha, WI 53188-0257 (US)
(72) Inventor: HEIDEMANN, Brian, Lake Mills, WI 53551 (US); STEPHENS, Kirt, New Berlin, WI 53146 (US); PELLMANN, Matt, Summit Wisconsin, WI 53066 (US)
(74) Representative: Wynne-Jones IP Limited

(57) **Abstract**

An electromagnetic actuator (10) includes an armature (18) and an anti-saturation and damping shim (19). The armature (18) is slidably actuatable and includes a central aperture (40) providing fluid communication longitudinally along the armature (18). The anti-saturation and damping shim (19) is configured to both dampen the actuation of the armature (18) within an electromagnetic actuator (10) and prevent the armature (18) from making unwanted contact with other magnetic objects.

## Description

### CROSS-REFERENCES TO RELATED APPLICATIONS

The present application is based on, claims priority to, and incorporates herein by reference in its entirety, United States Provisional Patent Application No. 62/607,184, filed on December 18, 2017, and entitled "Anti-Saturation and Damping Shim for an Electromagnetic Actuator."

### STATEMENT REGARDING FEDERALLY SPONSORED RESEARCH

Not Applicable.

### BACKGROUND

Electromagnetic actuators typically include a wire coil positioned within a housing and around a moveable armature. A current can be applied to the wire coil to produce a magnetic field that can then actuate (i.e., move) the moveable armature with respect to the housing. Typically, a pole piece is arranged within the housing to direct the magnetic field generated by the wire coil and influence an output force provided by actuation of the moveable armature. In some cases, the actuation of the armature within the pole piece can result in abrupt valve openings and closing. Further, in many instances, the armature can come into contact with another magnetic structure, which can lead to unwanted magnetic latching.

### SUMMARY OF THE INVENTION

The present disclosure provides an anti-latching and damping shim configured to both dampen the actuation of the armature within an electromagnetic actuator, as well as prevent the armature from making unwanted contact with other magnetic objects.

In one aspect, the present invention provides a shim for an electromagnetic actuator. The electromagnetic actuator includes an armature having a central aperture providing fluid communication of a process fluid longitudinally through the armature. The shim includes a flange having an upper surface, a lower surface, and an outer surface, and an upper portion extending away from the upper surface of the flange and configured to engage the central aperture of the armature. The shim further includes a protrusion protruding axially away from the lower surface, and at least one damping cutaway extending radially inward from the outer surface to a location at least partially within the upper portion.

In another aspect, the present invention provides an electromagnetic actuator in fluid communication with a process fluid. The electromagnetic actuator includes an armature being slidably received and selectively actuatable. The armature includes a central aperture providing fluid communication longitudinally through the armature. The electromagnetic actuator further includes a shim having a flange with an upper surface, a lower surface, and an outer surface. The shim further includes an upper portion extending away from the upper surface of the flange and configured to engage the central aperture of the armature, a protrusion protruding axially away from the lower surface, and a damping cutaway extending radially inward from the outer surface to a location at least partially within the upper portion.

The foregoing and other aspects and advantages of the invention will appear from the following description. In the description, reference is made to the accompanying drawings which form a part hereof, and in which there is shown by way of illustration a preferred embodiment of the invention. Such embodiment does not necessarily represent the full scope of the invention, however, and reference is made therefore to the claims and herein for interpreting the scope of the invention

### DESCRIPTION OF DRAWINGS

The invention will be better understood and features, aspects and advantages other than those set forth above will become apparent when consideration is given to the following detailed description thereof. Such detailed description makes reference to the following drawings
FIG. 1 is a schematic illustration of an electromagnetic actuator according to one aspect of the present disclosure.
FIG. 2 is a top, front, left isometric view of an anti-latching and damping shim according to one aspect of the present disclosure.
FIG. 3 is a right side view of the anti-latching and damping shim of FIG. 2.
FIG. 4 is a top view of the anti-latching and damping shim of FIG. 2.
FIG. 5 is a cross-sectional view of the anti-latching and damping shim of FIG. 4, taken along line 5-5.
FIG. 6 is a top view of another anti-latching and damping shim according to one aspect of the present disclosure.
FIG. 7 is a top view of another anti-latching and damping shim according to one aspect of the present disclosure.

### DETAILED DESCRIPTION OF THE INVENTION

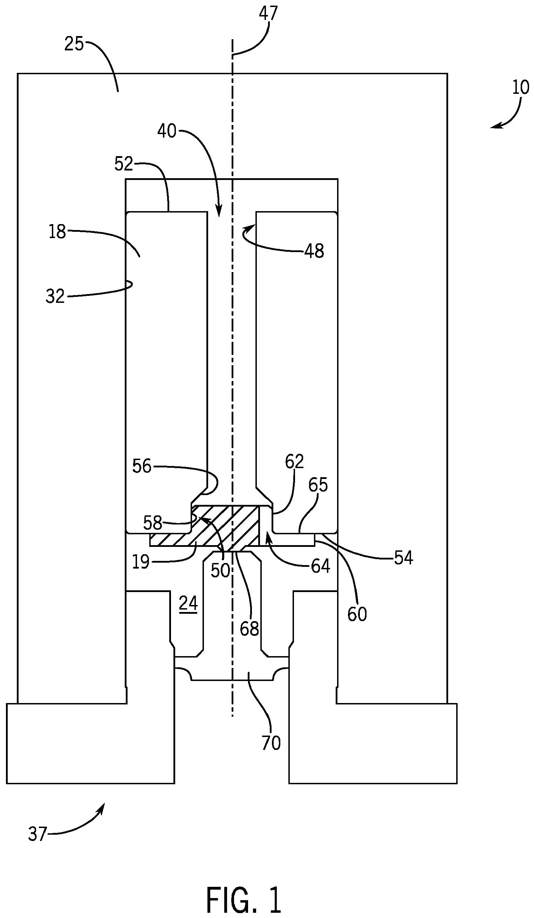

FIG. 1 shows an electromagnetic actuator 10 according to one aspect of the present disclosure. The electromagnetic actuator 10 can include an armature 18 disposed within an armature cavity 24 that is arranged inside of a housing 25. The electromagnetic actuator 10 can be any type of electromagnetic actuator configured for use with a variety of control valves. For example, in some configurations, the electromagnetic actuator 10 can additionally include one or more pole pieces (not shown) arranged at least partially within the housing 25. Further, in some configurations, the electromagnetic actuator 10 can further include a wire coil wrapped around a non-magnetic bobbin (not shown) and disposed within the housing 25. It should be appreciated that the illustrated housing 25 may comprise a plurality of components (e.g., a wire coil, a bobbin, one or more pole pieces, etc.) all arranged at least partially within the housing 25, but these components are hidden for purposes of illustration. Generally, in application, the armature cavity 24 may be defined by a component arranged within the housing 25. For example, one or more pole pieces may combine to form a cavity within which the armature 18 may be slidably received. Alternatively, the armature 18 may be slidably received within a thin-walled armature tube, which defines the armature cavity 24.

As with typical actuators, the wire coil wrapped around the bobbin can be arranged within the housing 25 such that, when assembled, the wire coil extends around the armature 18. In some configurations, the wire coil can be in communication with an electrical source (not shown) and a controller (not shown). The wire coil can thus be configured to produce a magnetic field, thereby applying a force to the armature 18 and thereby allowing the armature 18 to be selectively movable in an axial direction within the armature cavity 24 of the electromagnetic actuator 10. The magnitude of the magnetic field, and the force produced by the wire coil, can be determined by the magnitude of current applied to the wire coil. Accordingly, in some configurations, the controller can be configured to selectively apply a current to the wire coil at a desired magnitude to apply a predetermined force on the armature 18. Alternatively or additionally, the controller can be configured to control a direction of current applied to the wire coil and, thereby, control a direction that the armature moves in response to the generated magnetic field.

The armature 18 can be fabricated from a magnetic material (e.g., magnetic steel, iron, nickel, etc.). The armature 18 can include a central aperture 40 extending longitudinally through the armature 18. The central aperture 40 can include an upper portion 48 and a shim-engaging portion 50 axially separated from one another. The upper portion 48 can extend from a top surface 52 of the armature 18 toward a bottom surface 54 of the armature 18. The shim-engaging portion 50 can extend radially outward from the upper portion 48, such that the shim-engaging portion 50 of the central aperture 40 defines a larger diameter than the upper portion 48. The shim-engaging portion 50 can include an angled surface 56 and a shim-engaging surface 58. The angled surface 56 can extend at a non-perpendicular angle from the upper portion 48, away from a central axis 47 of the armature 18, toward the shim-engaging surface 58. The shim-engaging surface 58 may be sized to engage a shim 19, as will be discussed below.

The armature 18 can be selectively moveable axially within the armature cavity 24 between one or more positions in response to the force produced by the magnetic field of the wire coil. In the illustrated non-limiting example, both the armature 18 and the anti-latching and damping shim 19 are disposed coaxially (i.e., about the central axis 47 of the armature 18).

In some applications, the electromagnetic actuator 10 may be coupled to a control valve body 37 that includes an actuation element 70 (e.g., a spool) slidably arranged therein. The armature 18 may be configured to displace the actuation element 70 via a shim 19 arranged between the armature 18 and the actuation element 70. As will be described herein, the shim 19 can be coupled to the armature 18 and contact the actuation element 70 to translate the movement of the armature 18 to the actuation element 70. In general, the shim 19 can be configured to prevent magnetic contact between, for example, the armature 18 and another magnetic component (e.g., the control valve body 37), and provide and control an amount of damping provided to the armature 18 and the actuation element 70.

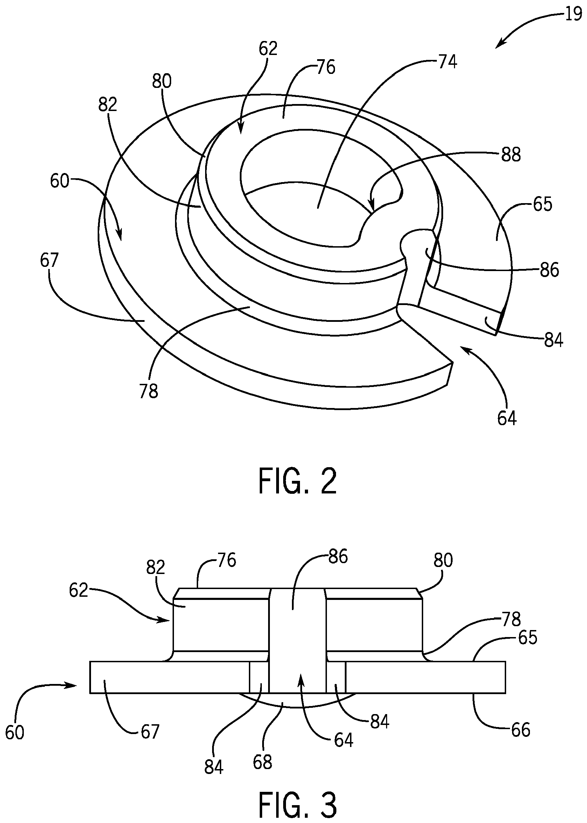

Referring now to FIGS. 2-5, the shim 19 can be fabricated from a non-magnetic material (e.g., plastic or a non-magnetic metal) and can include a flange 60, an upper portion 62, and a damping cutaway 64. The flange 60 can define an annular shape formed between an upper surface 65, a lower surface 66, and a circumferential outer surface 67. The lower surface 66 can include a protrusion 68 configured to engage the actuation element 70 of the control valve body 37 (shown in FIG. 1). As illustrated, the protrusion 68 defines a bulbous shape that protrudes axially away from the lower surface 66. In some other configurations, the protrusion 68 can define another suitable shape for engaging a corresponding actuation element in a given setting.

The upper portion 62 can axially extend away from the upper surface 65 of the flange 60 and can define a generally cylindrical shape. As illustrated in FIGS. 2-5, the upper portion 62 includes a recessed surface 74 that is recessed into an upper surface 76 of the upper portion 62, such that the recessed surface 74 is generally coplanar with the upper surface 65 of the flange 60. The upper portion 62 can further include a fillet 78 and a chamfer 80. The fillet 78 can be disposed around the circumference of the cylindrical shape of the upper portion 62 at a junction between an outer surface 82 of the upper portion 62 and the upper surface 65 of the flange 60. The chamfer 80 can be disposed around the circumference of the cylindrical shape of the upper portion 62 at a junction between the outer surface 82 and the upper surface 76 of the upper portion 62.

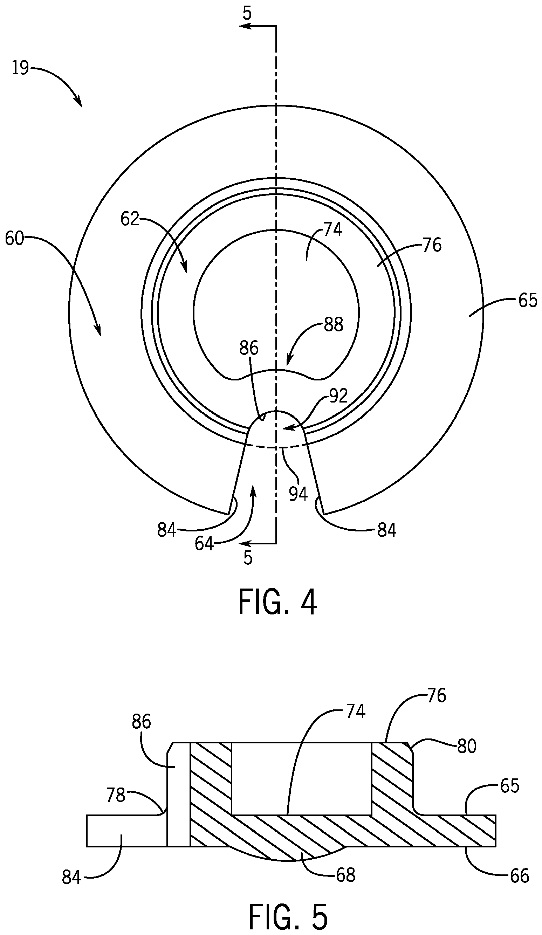

As illustrated in FIG. 4, the damping cutaway 64 can extend through a portion of both the upper portion 62 and the flange 60. For example, the damping cutaway 64 can extend radially inward from the outer surface 67 to a location at least partially within the upper portion 62. Accordingly, in some configurations, the damping cutaway 64 extends radially at least partially into the upper portion 62. The damping cutaway 64 can include a pair of sidewalls 84 connected by a rounded inner wall 86. The pair of sidewalls 84 can be angled with respect to each other, such that each of the sidewalls 84 extends in a radial direction away from the rounded inner wall 86. The rounded inner wall 86 can form an arc defining a portion of a circular shape. The rounded inner wall 86 can further be arranged and sized such that each of the sidewalls 84 extend generally tangentially with respect to the rounded inner wall 86.

The upper portion 62 can further include an inner protrusion 88 that extends radially into a cavity formed by the recessed surface 74 in the upper portion 62. In the illustrated configuration, the inner protrusion 88 generally aligns radially with a location of the rounded inner wall 86. The inner protrusion 88 can allow for a wall thickness of the upper portion 62 to remain substantially similar at or near the damping cutaway 64 as it is away from the damping cutaway 64. In some configurations, the shim 19 may be manufactured using a molding or forging process. In these configurations, the generally constant wall thickness defined by the upper portion 62 may aid with the flow of material and shrinkage during the molding or forging process.

When assembled, the shim 19 can be arranged such that the upper portion 62 is inserted into the shim-engaging portion 50 of the armature 18 and the flange 60 is engaged with the bottom surface 54 of the armature 18, as shown in FIG. 1. In some configurations, the upper portion 62 and the shim-engaging portion 50 of the armature 18 may be dimensioned to provide a press-fit between the armature 18 and the shim 19. In any case, once the upper portion 62 of the shim 19 is inserted into the shim-engaging portion 50, the shim 19 can be retained within the shim-engaging portion 50 of the armature 18. The retention of the shim 19 within the armature 18 can prevent the shim 19 from falling out of the armature 18 after assembly.

One non-limiting application where the electromagnetic actuator 10 can be integrated into a control valve will be described with reference to FIG. 1. The illustrated control valve body 37 and actuation element 70 are provided as an examples and are in no way meant to be limiting. It will be understood to those skilled in the art that the disclosed electromagnetic actuator 10, including the armature 18 and the shim 19, can be used with any suitable control valve.

In many instances, the control valve body 37 can be fabricated of a magnetic material. As such, in this setting, when the armature 18 is actuated toward the control valve body 37, if the armature 18 were to come into contact with the control valve body 37, the armature 18 would become magnetically attached thereto and magnetically saturate the magnetic flux path between the armature 18 and the control valve body 37. The flange 60 of the shim 19 can prevent the armature 18 from coming into contact with the control valve body 37 during operation. In this way, direct contact between the armature 18 and the control valve body 37 can be prevented and a magnetic "air gap" between the armature 18 and the control valve body 37 can be maintained, which inhibits magnetic latching between the armature 18 and the control valve body 37.

It should be appreciated that in other electromagnetic actuators or other control valve designs, the shim 19 may prevent magnetic contact between the armature 18 and another component within the magnetic circuit of the actuator 10.

Further, in operation, the control valve body 37 can be in fluid communication with a process fluid (e.g., oil), and the actuation element 70 within the control valve body 37 can be actuated in response to axial movement of the armature 18. In some configurations, the actuation of the actuation element 70 can selectively provide and/or inhibit fluid communication between one or more ports (not shown) of the control valve body 37.

In some configurations, the process fluid can be communicated into the armature cavity 24. In these configurations, the process fluid can act to provide dampening during actuation of the armature 18. For example, if the armature 18 is actuated axially upward (from the perspective of FIG. 1) in the armature cavity 24, process fluid trapped behind the armature 18 (i.e., adjacent to the top surface 52) can be forced, through the central aperture 40, toward the control valve body 37, due to the enclosure of the armature 18 within the armature cavity 24. Similarly, if the armature 18 is actuated axially toward the control valve body 37, process fluid trapped in front of the armature 18 (i.e., adjacent to the bottom surface 54) can be forced, through the central aperture 40, toward the top surface 52 of the armature 18.

As such, damping control can be provided by the shim 19. Specifically, an interaction between the damping cutaway 64 and the armature 18 can control an amount of damping provided by the shim 19 to the armature 18. The outer surface 82 of the shim 19 can engage the shim-engaging surface 58 of the armature 18, such that a seal is formed therebetween. Similarly, the upper surface 65 of the flange 60 of the shim 19 can engage the bottom surface 54 of the armature 18, such that a secondary seal is formed therebetween. However, in operation, only the primary seal formed between the outer surface 82 and the shim-engaging surface 58 may be required for forming a seal between the shim 19 and the armature 18 (i.e., force all fluid flow through the damping cutaway 64). In addition, a depth that the shim 19 is pressed into the armature 18 does not affect the damping characteristics of the shim 19.

As illustrated, with the shim 19 arranged within the shim-engaging portion 50 of the armature 18, flow of process fluid traveling through the armature 18 is forced into and axially through a flow path defined between the damping cutaway 64 of the shim 19 and the shim-engaging surface 58 of the armature 18. That is, when process fluid flows from below the armature 18 toward the top surface 52, or vice versa, the process fluid flows between the damping cutaway 64 and the shim-engaging surface 58, through an effective flow area 92 (see FIG. 4). The effective flow area 92 can be the area defined between the damping cutaway 64 and the outer diameter defined be the shim-engaging surface 58 (represented by dashed arc 94 in FIG. 4). As such, the damping effect can be controlled, in part, by the sizing of the damping cutaway 64.

In some configurations, a minimum area defined by the effective flow area 92 may control the amount of damping on the armature 18 provided by the shim 19. That is, the effective flow area 92 can be formed in the radial gap between the damping cutaway 64 and the shim-engaging surface 58 and extend axially to the upper surface 76 of the shim 19. An area defined by the effective flow area 92 can vary as it extends axially between the damping cutaway 64 and the shim-engaging surface 58. In general, a minimum area defined by the effective flow area 92 can occur at an axial location that is axially above (from the perspective of FIG. 1) the upper surface 65 of the flange 60 of the shim 19. Thus, the geometric interaction between the armature 18 and the shim 19 that controls the amount of damping provided to the armature 18 can be formed at a location that is axially above (from the perspective of FIG. 1) the upper surface 65 of the flange of the shim 19.

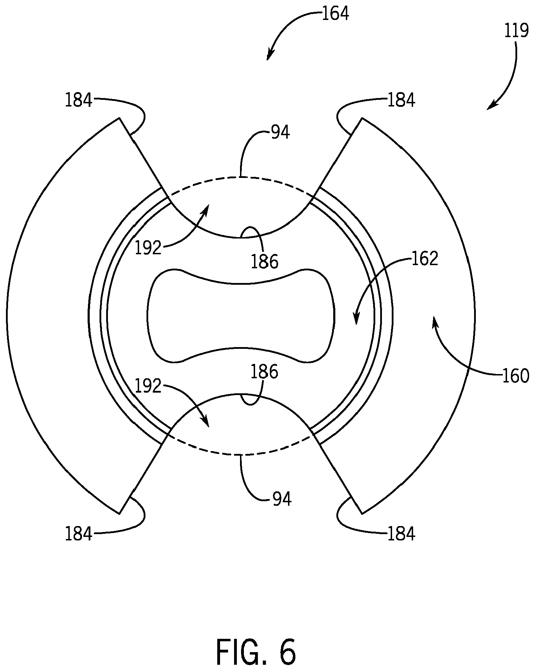

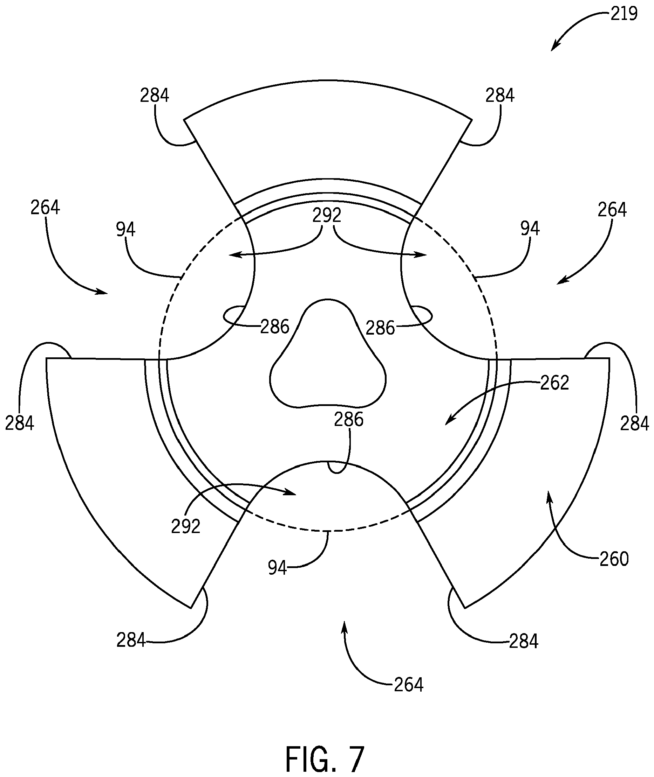

In some configurations, the damping effect provided by the interaction between the armature 18 and the shim 19 (i.e., the effective flow area 92) can be further controlled by the inclusion of multiple damping cutaways, thereby providing multiple axial flow paths and increase the effective flow area provided by the shim 19. For example, referring to FIGS. 6 and 7, a shim 119 and a shim 219 are illustrated that can be used in place of the shim 19. The shims 119, 219 are substantially similar to the shim 19, and as such, like parts are labeled with like reference numbers in the 100's and 200's.

Referring to FIG. 6, the shim 119 can include a pair of opposed damping cutaways 164. The pair of opposed damping cutaways 164 can be substantially similar in shape to the damping cutaway 64 of the shim 19, but can be larger than the damping cutaway 64. That is, the rounded inner wall 186 defines a radius of curvature that is larger than that of the rounded inner wall 86. However, the pair of sidewalls 184 can similarly be angled relative to one another such that each extends in a radial direction away from the rounded inner wall 186. Again, the rounded inner wall 186 can be arranged such that each of the sidewalls 184 extends tangentially with respect to the rounded inner wall 186. Similar to the shim 19, when the shim 119 is arranged within the shim-engaging portion 50 of the armature 18, flow of process fluid is forced to flow axially in flow paths defined between the damping cutaways 164 and the shim-engaging surface 58 of the shim-engaging portion 50 of the armature 18. Effective flow areas 192 of these flow paths are illustrated in FIG. 6, with the shim-engaging surface 58 of the armature 18 again being represented by the dashed arc 94. Due to the additional damping cutaway 164 and the larger sizing of the damping cutaways 164, the total effective flow area (i.e., the combination of each of the effective flow areas 192) is substantially larger than the effective flow path area 92 of the shim 19. As such, process fluid can flow through the shim 119 at a greater flow rate than the shim 19, thus controlling the damping effect provided to the armature 18 by the shim 119 to a different level than (e.g., a reduced level compared to) the shim 19.

Referring to FIG. 7, the shim 219 can include a three evenly-spaced damping cutaways 264. The damping cutaways 264 can be substantially similar in size and shape to the damping cutaway 164 of the shim 119. Again, the pair of sidewalls 284 of each damping cutaway 264 can similarly be angled relative to one another such that each extends in a radial direction away from the rounded inner wall 286. Similarly, the rounded inner wall 286 can be arranged such that each of the sidewalls 284 extends tangentially with respect to the rounded inner wall 286. Similar to the shims 19, 119, when the shim 219 is arranged within the shim-engaging portion 50 of the armature 18, flow of process fluid is forced to flow axially through flow paths defined between the damping cutaways 264 and the shim-engaging surface 58 of the armature 18. Effective flow path areas 292 of these flow paths are illustrated in FIG. 7, with the shim-engaging surface 58 of the armature 18 again being represented by the dashed arc 94. Due to the additional damping cutaways 264, the total effective flow path area (i.e., the combination of each of the effective flow path areas 292) is larger than the total effective flow path area (i.e., the combination of each of the effective flow areas 192) of the shim 119. As such, process fluid can flow through the shim 219 at a greater flow rate than the shim 119, thus further controlling the damping effect provided to the armature 18 by the shim 219 to a different level than (e.g., a reduced level compare to) the shims 19 and 119.

It should be appreciated that the various shims 19, 119, 219 disclosed herein are intended to be exemplary, and are in no way meant to be limiting. For example, while shims with one, two, and three damping cutaways are illustrated, other shims may include more than three damping cutaways. Further the respective sizing of the damping cutaways 64, 164, 264 are intended to be exemplary. For example, damping cutaways smaller than that of damping cutaway 64 may be provided to allow for an increased damping effect of a shim arranged within the electromagnetic actuator 10, described above. Alternatively or additionally, damping cutaways larger than that of the damping cutaways 164, 264 may be provided to allow for a further reduced damping effect.

Additionally, the illustrated damping shims 119, 219 are shown with multiple damping cutaways 164, 264 each having a similar size. In other embodiments, a damping shim with multiple damping cutaways of differing sizes may be provided as desired for given operating conditions. Further, the illustrated damping shims 119, 219 are shown with multiple damping cutaways 164, 264 that are evenly spaced around the circumference of the corresponding shims 119, 219. In other embodiments, a damping shim with multiple damping cutaways that are not evenly spaced around the circumference of the shim may be provided as desired for given operating conditions.

Within this specification embodiments have been described in a way which enables a clear and concise specification to be written, but it is intended and will be appreciated that embodiments may be variously combined or separated without parting from the invention. For example, it will be appreciated that all preferred features described herein are applicable to all aspects of the invention described herein.

Thus, while the invention has been described in connection with particular embodiments and examples, the invention is not necessarily so limited, and that numerous other embodiments, examples, uses, modifications and departures from the embodiments, examples and uses are intended to be encompassed by the claims attached hereto. The entire disclosure of each patent and publication cited herein is incorporated by reference, as if each such patent or publication were individually incorporated by reference herein.

Various features and advantages of the invention are set forth in the following claims.

## Claims

1. A shim for an electromagnetic actuator, the electromagnetic actuator including an armature having a central aperture providing fluid communication of a process fluid longitudinally through the armature, the shim comprising:
a flange including an upper surface, a lower surface, and an outer surface;
an upper portion extending away from the upper surface of the flange and configured to engage the central aperture of the armature; and
at least one damping cutaway extending radially inward from the outer surface to a location at least partially within the upper portion.

2. The shim of claim 1, wherein an effective flow area is defined between the at least one damping cutaway and the central aperture of the armature, and the effective flow area controls an amount of damping provided to the armature.

3. The shim of claim 1, further comprising a protrusion protruding axially away from the lower surface.

4. The shim of claim 1, wherein the at least one damping cutaway extends through both the upper portion and the flange.

5. The shim of claim 1, wherein the at least one damping cutaway includes a pair of sidewalls connected by a rounded inner wall.

6. The shim of claim 5, wherein the pair of sidewalls are angled with respect to each other, such that each sidewall of the pair of sidewalls extends in a radial direction, with respect to the flange, away from the rounded inner wall.

7. The shim of claim 6, wherein the rounded inner wall is arranged and sized such that each of the sidewalls extend tangentially with respect to the rounded inner wall.

8. The shim of claim 1, wherein the at least one damping cutaway comprises a plurality of damping cutaways.

9. The shim of claim 8, wherein the plurality of damping cutaways are substantially equal in size.

10. The shim of claim 8, wherein the plurality of damping cutaways are evenly spaced around a circumference of the shim.

11. An electromagnetic actuator in fluid communication with a process fluid, the electromagnetic actuator comprising:
an armature being slidably received and selectively actuatable, wherein the armature includes a central aperture providing fluid communication longitudinally through the armature; and
a shim comprising:
a flange including an upper surface, a lower surface, and an outer surface;
an upper portion extending away from the upper surface of the flange and configured to engage the central aperture of the armature; and
a damping cutaway extending radially inward from the outer surface to a location
at least partially within the upper portion.

12. The electromagnetic actuator of claim 11, wherein an effective flow area is defined between the damping cutaway and the central aperture of the armature, and the effective flow area controls an amount of damping provided to the armature.

13. The electromagnetic actuator of claim 12, wherein the upper portion is press-fit into the central aperture of the armature, such that, upon insertion of the upper portion into the central aperture, the shim is retained in the central aperture of the armature.

14. The electromagnetic actuator of claim 11, wherein the flange of the shim is configured to prevent direct contact between the armature and the control valve body during actuation of the armature.

15. The electromagnetic actuator of claim 11, wherein the shim includes a protrusion protruding axially away from the lower surface, and the protrusion is configured to be in engagement with an actuation element received within the control valve body.
